# EUROPEAN PATENT SPECIFICATION

(11) **EP 3 448 080 B1**
(45) Date of publication and mention of the grant of the patent: **30.09.2020**
(21) Application number: 17785629.1
(22) Date of filing: 22.02.2017
(51) Int. Cl.: H04W 16/26, H04W 24/10, H04W 92/12

(54) **RADIO UNIT AND INTERFERENCE LEVEL REPORT METHOD**
FUNKEINHEIT UND VERFAHREN ZUR MELDUNG VON INTERFERENZPEGEL
UNIT RADIO ET PROCÉDÉ DE RAPPORT DE NIVEAU D'INTERFÉRENCE

(30) Priority: 21.04.2016 JP 2016085409
(43) Date of publication of application: 27.02.2019
(73) Proprietor: NTT DOCOMO, INC., Chiyoda-ku Tokyo 100-6150 (JP)
(72) Inventor: TAKIGUCHI, Takahiro, Tokyo 100-6150 (JP); OOKUBO, Naoto, Tokyo 100-6150 (JP); ISOGAWA, Takayuki, Tokyo 100-6150 (JP); UCHINO, Tooru, Tokyo 100-6150 (JP)
(74) Representative: Hoffmann Eitle
(86) International application number: PCT/JP2017/006536
(87) International publication number: WO 2017/183284

(56) References cited:
- WO-A1-2015/042818
- CN-A- 104 617 995
- JP-A- 2015 005 872
- KT CORPORATION: "Motivation for Study on Cloud RAN Architecture", 3GPP DRAFT; RP-151864 MOTIVATION FOR STUDY ON C-RAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Sitges, Spain; 20151207 - 20151210 7 December 2015 (2015-12-07), XP051052765, Retrieved from the Internet: URL:http://www.3gpp.org/ftp/Meetings_3GPP_ SYNC/RAN/Docs/ [retrieved on 2015-12-07]
- "Fronthauling with New Radio Technology", 3GPP TSG-RAN WG2#93bis R2-162826, 2 April 2016 (2016-04-02), XP051082577,
- "Overall radio protocol and NW architecture for NR", 3GPP TSG-RAN WG3#91bis R3- 160829, 1 April 2016 (2016-04-01), XP051082960,

## Description

### TECHNICAL FIELD

The present invention relates to a centralized RAN radio unit and an interference level report method.

### BACKGROUND ART

In wireless communication systems of long term evolution (LTE) and LTE-advanced (LTE-A), there is known a technology referred to as centralized radio access network (C-RAN) capable of accommodating many cells while suppressing apparatus cost to efficiently support areas such as hot spots in which traffic is high.

C-RAN is configured to include one radio unit (RU) which is a remotely installed base station or a plurality of RUs and a digital unit (DU) which is a base station performing centralized control on the RU. A DU has functions of Layers 1 to 3 that a base station has. An orthogonal frequency division multiplexing (OFDM) signal generated by the DU is sampled and transmitted to an RU. Then, the OFDM signal is transmitted from a radio frequency (RF) function unit included in the RU.

Patent Document 1 discloses a method for resisting small base station uplink signal interference of an indoor distributed antenna system (DAS) based on antenna selection.

Patent Document 2 discloses a method and apparatus for cross-subframe interference elimination in a dynamic TDD system.

### CITATION LIST

### NON-PATENT DOCUMENT

Non-Patent Document 1: "Radio Equipment and Antennas for Advanced C-RAN Architecture," July 2015, NTT Docomo, Internet <URL: https://www.nttdocomo.co.jp/corporate/technology/rd/technic al_journal/bn/vol23_2/005.html>

### PATENT DOCUMENT

Patent Document 1: US 2017/0359763 A1
Patent Document 2: WO 2015/042818 A1

### SUMMARY OF THE INVENTION

### PROBLEM TO BE SOLVED BY THE INVENTION

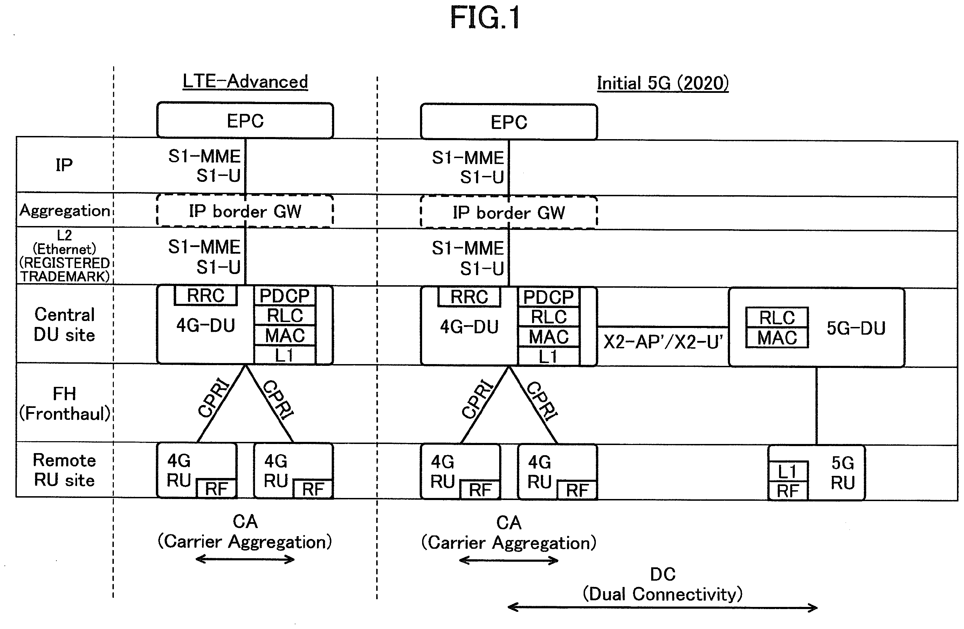

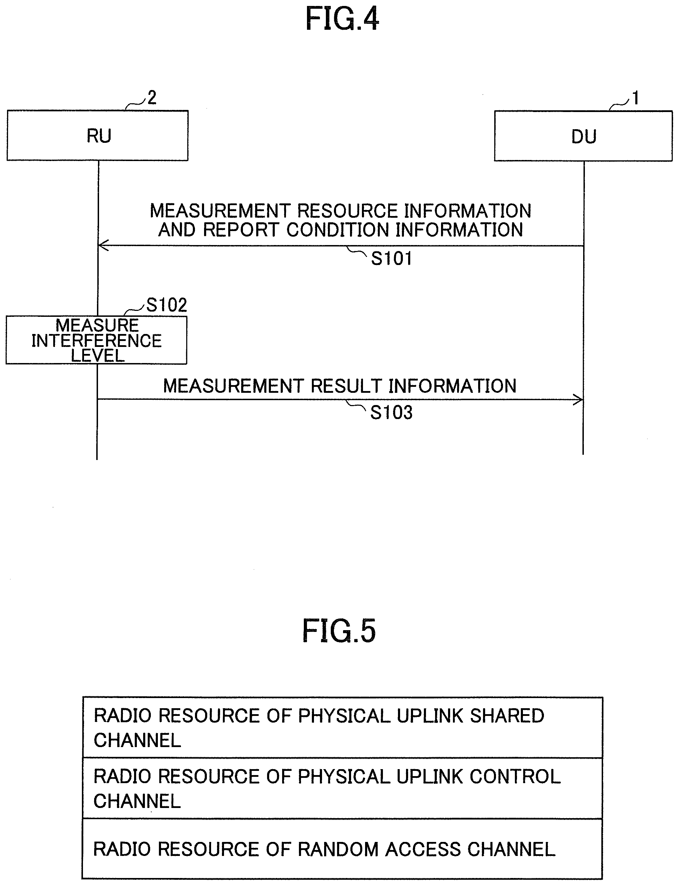

Next, the configuration of a C-RAN examined in 5G will be described. In Fig. 1, 4G-DU and 4G-RU mean a DU and an RU that have functions of LTE-A (including functions of LTE). In addition, 5G-DU and 5G-RU mean a DU and an RU that have functions of 5-generation wireless technologies. Here, 4G-DU and 5G-DU are connected by interfaces expanded from X2-AP and X2-U interfaces in LTE. A network circuit connecting the DU to the RU is referred to as a front haul (FH). In LTE, a common public radio interface (CPRI) is used for the FH.

In current LTE, functions of Layer 1 (physical layer: L1) and Layer 2 (MAC, RLC, and PDCP) are assumed to be mounted on a DU side. Therefore, a bandwidth necessary for an FH is about 16 times a peak rate supported in a DU. For example, when a system bandwidth is 20 MHz and a DU supports wireless communication (maximum 150 Mbps) of 2x2 multi input multi output (MIMO), a bandwidth necessary for an FH is about 2.4 Gbps.

In the currently examined 5G, a peak rate of 10 Gbps or more and new low delaying are scheduled to be realized. Accordingly, when 5G is introduced, a bandwidth necessary for an FH also considerably increases with an improvement in the peak rate. Thus, it is examined that a reduction in an amount of information transmitted with an FH by realizing some of the layers mounted on a DU on an RU side. Diverse variations are considered to realize the function of a certain layer on the RU side. For example, a plan to realize some or all of the functions of Layer 1 of a DU by an RU and a plan to realize some of Layers 1 and 2 on an RU side have been examined.

Base stations determine interference levels from adjacent cells or the like and perform transmission power control and scheduling control of user equipments according to the magnitudes of the interference levels. When the functions of Layer 1 are realized on a DU side, an interference level is measured on the DU side. However, when some or all of the functions of Layer 1 are realized in an RU, as described above, it is considered that it is necessary to measure interference wave power on the RU side. However, in 3GPP, an interface for measuring an interference level by an RU and reporting the interference level to a DU is not defined in a current situation.

A technology of the disclosure is devised in view of the forgoing circumstance and an object of the invention is to provide a technology for enabling an interference level to be measured by an RU and to be reported to a DU.

### MEANS FOR SOLVING PROBLEM

The invention is defined by independent claims. Dependent claims define preferred embodiments of the invention.

According to the technology of the disclosure, an extension station in a wireless base station including the extension station and a central aggregation station include: an acquisition unit configured to acquire measurement resource information from the central aggregation station; a measurement unit configured to measure interference wave power of a radio resource indicated by the measurement resource information; and a transmission unit configured to transmit a measurement result of the interference wave power measured by the measurement unit to the central aggregation station. The measurement resource information is information indicating a radio resource of which uplink interference wave power is to be measured.

### EFFECT OF THE INVENTION

The technology of the disclosure provides a technology for enabling an interference level to be measured by an RU and to be reported to a DU.

### BRIEF DESCRIPTION OF DRAWINGS

Fig. 1 is a diagram illustrating a configuration example of C-RAN examined in 5G;
Fig. 2 is a diagram illustrating a system configuration example of a wireless communication system according to an embodiment;
Fig. 3 is a diagram for describing a function apportionment example of a DU and an RU;
Fig. 4 is a sequence diagram illustrating an example of a processing procedure performed by the wireless communication system according to the embodiment;
Fig. 5 is a diagram illustrating an example of measurement resource information;
Fig. 6 is a diagram illustrating an example of report condition information;
Fig. 7 is a diagram illustrating an example of measurement result information;
Fig. 8 is a diagram illustrating examples of indexes;
Fig. 9 is a diagram illustrating a functional configuration example of the DU according to the embodiment;
Fig. 10 is a diagram illustrating a functional configuration example of the RU according to the embodiment; and
Fig. 11 is a diagram illustrating a hardware configuration example of the DU and the RU according to the embodiment.

### MODE(S) FOR CARRYING OUT THE INVENTION

Hereinafter, embodiments of the invention will be described with reference to the drawings. The embodiments to be described below are merely examples and embodiments to which the invention is applied are not limited to the following embodiments. For example, a wireless communication system according to the embodiments is assumed to be a system of a scheme conforming to LTE. However, the invention is not limited to LTE, but other schemes can also be applied. In the present specification and the claims, "LTE" is used as meanings including not only a communication scheme corresponding to release 8 or 9 of 3GPP but also a 5th-generation communication scheme corresponding to releases subsequent to releases 10, 11, 12, and 13, or release 14 of 3GPP unless otherwise mentioned.

"Layer 1" is synonymous with the "physical layer." Layer 2 include a medium access control (MAC) sublayer, a radio link control (RLC) sublayer, and a packet data convergence protocol (PDCP) sublayer. An "interference level" used in the following description is synonymous with interference wave power.

### <System Configuration>

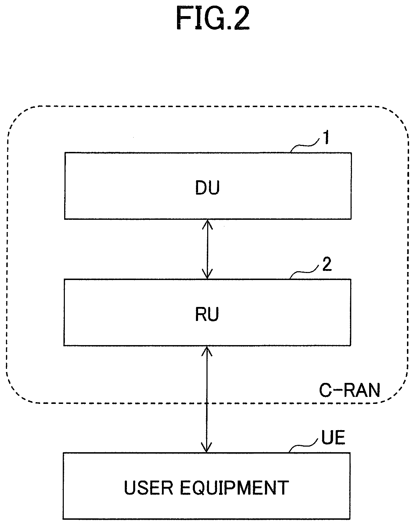

Fig. 2 is a diagram illustrating a system configuration example of a wireless communication system according to an embodiment. As illustrated in Fig. 2, the wireless communication system according to the embodiment includes a DU 1, an RU 2, and a user equipment UE. In Fig. 2, one RU 2 is illustrated, but two or more RUs 2 may be included. That is, the DU 1 may be configured to control the plurality of RUs 2.

The DU 1 may be referred to as a central digital unit, may be referred to as a baseband unit (BBU), or may be referred to as a central unit (CU). In addition, the DU 1 may be referred to as a central base station, may be simply referred to as a base station (eNB: enhanced Node B), or may be referred to as a first base station.

The RU 2 may be referred to as a remote radio unit (RRU), may be referred to as a remote antenna unit (RAU), or may be referred to a remote radio head (RRH). In addition, the RU 2 may be referred to as a remote base station, may be simply referred to as base station, or may be referred to as a second base station.

The wireless communication system according to the embodiment transmits and receives predetermined signals to and from the DU 1 and the RU 2 via an FH, and some of the functions of layers which the DU 1 has are realized by the RU 2.

### <Function Apportionment of DU and RU>

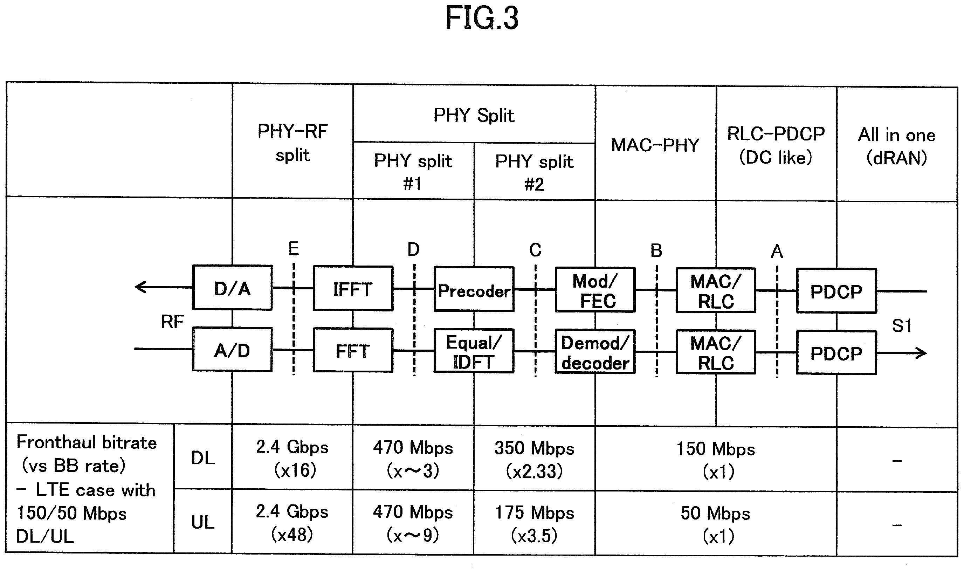

Fig. 3 is a diagram for describing a function apportionment example of a DU and an RU. In Fig. 3, boundaries "A" to "E" indicate boundaries of functions mounted on the DU 1 and the RU 2. For example, a case in which the functions are apportioned with the boundary "B" means that the functions of layers equal to or higher than Layer 2 are mounted on the side of the DU 1 and the functions of Layer 1 are mounted on the side of the RU 2. A case in which the functions are apportioned with the boundary "E" is equivalent to a configuration in which the functions of layers equal to or higher than Layer 1 are mounted on the side of the DU 1 and the DU 1 and the RU 2 are connected to each other using CPRI.

Fig. 3 illustrates an example of a bit rate necessary for the FH at each boundary. For example, 150 Mbps (DL: downlink)/50 Mbps (UL: uplink) is assumed to be support in the DU 1. In this case, when the functions are apportioned with the boundary "A" or "B," a bandwidth necessary for the FH is 150 Mbps (DL)/50 Mbps (UL). In addition, when the functions are apportioned with the boundary "C," a bandwidth necessary for the FH is 350 Mbps (DL)/175 Mbps (UL). Similarly, when the functions are apportioned with the boundary "D," a bandwidth necessary for the FH is 470 Mbps (DL)/470 Mbps (UL). On the other hand, when the functions are apportioned with the boundary "E," a bandwidth necessary for the FH is 2.4 Gbps (DL)/2.4 Gbps (UL).

The wireless communication system according to the embodiment may be configured such that the function apportionment at one boundary among the boundaries "A" to "E" is supported or may be configured such that the functions apportionment at different boundaries is supported in UL and DL.

### <Processing Procedure>

Fig. 4 is a sequence diagram illustrating an example of a processing procedure performed by the wireless communication system according to the embodiment. A processing procedure when the RU 2 measures an interference level and transmits the interference level to the DU 1 will be described with reference to Fig. 4.

In step S101, the DU 1 transmits measurement resource information indicating a radio resource of which an uplink interference level is to be measured and report condition information indicating a report condition at the time of reporting the uplink interference level to the RU 2.

Fig. 5 is a diagram illustrating an example of measurement resource information. As illustrated in Fig. 5, the measurement resource information includes information indicating "a radio resource of a physical uplink shared channel," information indicating "a radio resource of a physical uplink control channel," and information indicating a "radio resource of a random access channel." In the example of Fig. 5, it is meant that the DU 1 requests the RU 2 to transmit an interference level related to "the radio resource of the physical uplink shared channel," an interference level related to "the radio resource of the physical uplink control channel," and an interference level related to "the radio resource related to the random access channel."

The information indicating "the radio resource of the physical uplink shared channel" includes a range (a frequency range or frequency and time ranges) of radio resources which can be allocated to the physical uplink shared channel in all the uplink system bandwidths. In the case of LTE, the range of the radio resources is a range other than a region allocated to the physical uplink control channel (both ends of the system bandwidth) and a region allocated to the random access channel in all the system bandwidths.

The information indicating "the radio resource of the physical uplink control channel" includes a range (a frequency range or frequency and time ranges) of radio resources which can be allocated to the physical uplink shared channel in all the uplink radio resources. The range of the radio resource which can be allocated to the physical uplink control channel and is included in the information indicating "the radio resource of the physical uplink control channel" may be further subdivided into pieces of information indicating whether the physical uplink control channel with each format is mapped to a certain range (in LTE, resource blocks (RBs) for each format of the physical uplink control channel.

The information indicating "the radio resource of the random access channel" includes information indicating a range (a frequency range or frequency and time ranges) of radio resources allocated to a random access channel (in LTE, radio resources used to transmit random access preambles) in all the uplink radio resources.

The measurement resource information illustrated in Fig. 5 is an example of a case in which an interference level of each frequency can be determined by the DU 1 over all the system bandwidths in consideration of the configuration of the physical uplink channel in LTE in a current situation, but the invention is not limited thereto. For example, the measurement resource information may include only information indicating radio resources of some of the physical channels. In this case, the RU 2 measures only an interference level of each frequency in the radio resources of the indicated physical channels and transmits the interference level to the DU 1. The measurement resource information may include information indicating radio resources of physical channels which are likely to be newly defined in 5G.

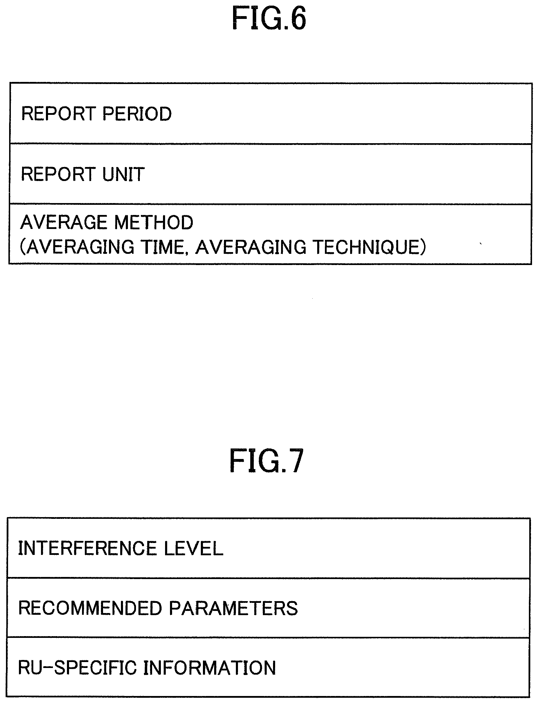

Fig. 6 is a diagram illustrating an example of report condition information. As illustrated in Fig. 6, the report condition information includes information indicating a "report period," information indicating a "report unit," and information indicating an "average method."

The information indicating the "report period" indicates a period at which the interference level is transmitted (reported) to the DU 1. The information indicating the "report unit" indicates a unit in which the interference level is reported to the DU 1. For example, one RB unit, a plurality of RB units, or a system bandwidth unit is used. When one RB unit is indicated, the RU 2 transmits (reports) the interference level with respect to the entire bandwidth of the radio resource indicated by the "measurement resource information" to the DU 1 at granularity of each RB unit. When the plurality of RB units are indicated, the RU 2 transmits (reports) the interference level with respect to the entire bandwidth of the radio resources indicated by the "measurement resource information" to the DU 1 at granularity of every plurality of RB units. When the system bandwidth unit is indicated, the RU 2 transmits (reports) one interference level to the DU 1 at the entire system bandwidth. The "report unit" is not limited thereto and any unit may be used.

The "average method" indicates an averaging time of the measured interference level (for example, whether measurement results in a predetermined time are averaged or whether instantaneous values are reported without being averaged) or/ and an averaging technique (for example, whether measurement results in a predetermined period are simply averaged or whether measurement results are weight-averaged using an oblivion coefficient). All or some of the "report period," "the report unit," and the "average method" may be defined separately for each classification of physical channels in the measurement resource information. For example, the information indicating the "report unit" may be set so that the interference level is reported in the RB unit for the physical uplink control channel and the random access channel and may be set so that the interference level is report in 4 RB units for the physical uplink shared channel (when a bandwidth equivalent to 16 RB units is present in the physical uplink shared channel, the RU 2 reports the interference level in the 4 RB units). The DU 1 can determine the interference level at coarse granularity for the physical uplink shared channel with a broad bandwidth and determine the interference level at fine granularity for the random access channel and the physical uplink control channel with a narrow bandwidth. As another example, the information indicating the "report period" may be set to be report at intervals of 100 ms for the physical uplink control channel and may be set to be reported at intervals of 1000 ms (intervals of 1 s) for the physical uplink shared channel and the random access channel. Referring back to Fig. 4, the description will be continued.

In step S102, the RU 2 measures the interference level of radio resources indicated by the measurement resource information. The RU 2 may measure the interference level in accordance with any method or may measure the interference level in accordance with, for example, the following method.

For example, when the interference level of the radio resources of the physical uplink shared channel is measured, it is considered that the RU 2 measures reception power of a reference signal (for example, DM-RS) included in the physical uplink shared channel with respect to the radio resources transmitted from the user equipment UE by a signal of the physical uplink shared channel and measures the interference level by measuring all the reception power containing interference waves in the radio resources transmitted by the reference signal and subtracting reception power of the reference signal from all the measured reception power. For the radio resource with which the signal of the physical uplink shared channel is not transmitted from any user equipment UE, it is considered that the RU 2 regards all the reception power measured with the radio resources as an interference level.

In order for the side of the RU 2 to determine whether the physical uplink shared channel is transmitted with a certain radio resource from the user equipment UE, information indicating a scheduling situation may be transmitted from the DU 1 to the RU 2. The DU 1 may further include information indicating the position of the radio resource (a frequency position or frequency and time positions) of the physical uplink shared channel actually allocated to each user equipment UE in information indicating the above-described "radio resource of the physical uplink shared channel" and may transmit the information to the RU 2.

When the interference level of the radio resource of the physical uplink shared channel is measured, it is considered that the RU 2 measures reception power of a sounding reference signal and measures the interference level by measuring all the reception power containing interference waves in the radio resources transmitted by the reference signal and subtracting the reception power of the reference signal from all the measured reception power.

In order for the side of the RU 2 to determine whether a sounding reference signal is transmitted with a certain radio resource from the user equipment UE, the DU 1 includes information indicating the position of the radio resource (a frequency position or frequency and time positions), with which the sounding reference signal is transmitted and of which each user equipment UE is notified, in information indicating "the radio resource of the physical uplink shared channel" and may transmit the information to the RU 2.

For example, when the interference level of the radio resource of the physical uplink control channel is measured, it is considered that the RU 2 measures reception power of a reference signal (for example, DM-RS) mapped to some of the radio resources in signals of the physical uplink control channel with respect to the radio resources transmitted from the user equipment UE by a signal of the physical uplink shared channel and measures the interference level by measuring all the reception power containing interference waves in the radio resources to which the reference signal is mapped and subtracting reception power of the reference signal from all the measured reception power. For the radio resource with which the signal of the physical uplink control channel is not transmitted from any user equipment UE, it is considered that the RU 2 regards all the reception power measured with the radio resources as an interference level.

In order for the side of the RU 2 to determine whether the signal of the physical uplink control channel is transmitted with a certain radio resource from the user equipment UE, information indicating a scheduling situation may be transmitted from the DU 1 to the RU 2. The DU 1 may further include information indicating the position of the radio resource (a frequency position or frequency and time positions) of the physical uplink control channel actually allocated to each user equipment UE in information indicating the above-described "radio resource of the physical uplink control channel" and may transmit the information to the RU 2.

For example, when the interference level of the radio resource of the random access channel is measured, it is difficult for the RU 2 to predict a timing at which a random access signal is transmitted from the user equipment UE. Therefore, it is considered that all the reception power measured with the radio resource is regarded as the interference level.

Since it is necessary to transmit the interference level to the DU 1 at a period indicated by the "report period," the RU 2 measures the interference level at least at the same period as the "report period" or a shorter period than the "report period." The RU 2 averages values of the measured interference levels in accordance with a method indicated by the "average method."

In step S103, measurement result information including the measurement result of the interference level measured in the processing procedure of step S102 is transmitted to the DU 1 by the RU 2.

Fig. 7 is a diagram illustrating an example of the measurement result information. The measurement result information includes the measured "interference level," "recommended parameters" indicating various parameters estimated from the measured interference level, and "RU-specific information" which is information regarding a wireless circuit or the like of the RU 2.

The "interference level" includes a value of the interference level for each unit indicated by the "report unit." The value of the interference level may be, for example, a measured value (for example, -100 dBm), may be a maximum value and a minimum value in the "report period" indicated by the "report condition information," or may be an average value calculated in accordance with the above-described "average method." The value (dBm) of the interference level may be expressed with an absolute value.

The "recommended parameters" include a recommended value of initial transmission power of which the user equipment UE is notified by the DU 1 or a recommended value (an aggregation level for each piece of control information (DCI in LTE)) of a radio resource size to be used for transmission of a physical downlink control channel (PDCCH in LTE). Since the "recommended parameters" are merely recommended values from the viewpoint of the RU 2 and are parameters to be finally decided by the DU 1, the recommend parameters may not be included in the "report result information."

The "RU-specific information" includes a noise figure (NF) in a wireless circuit of the RU 2, an amplification gain of an uplink signal, a model name of the RU 2, or/and the number of slave stations (for example, small base stations installed in each floor of a building) connected to the RU 2. Since the "RU-specific information" can be set in advance as operation and maintenance (OAM) or the like in the DU 1, the "RU-specific information" may not be included in the "report result information." Since the "RU-specific information" is information which is not basically changed, the "RU-specific information" may be included in the "report result information" only when the measurement result is first transmitted from the RU 2 to the DU 1.

Based on the received measurement result, the DU 1 performs transmit power control (TPC) control and scheduling control or the like according to the magnitude of the interference level. For example, when the interference level of a frequency to be scheduled is large, it is considered that the DU 1 performs control such that initial transmission power of which the user equipment UE is notified increases. When a variation width of the interference level is large, it is considered that the DU 1 shortens the period of the TPC control. When the interference level is large, it is considered that the DU 1 performs scheduling of the physical uplink shared channel in order from the radio resource of the frequency in which the interference level is small. It can be considered that the DU 1 allocates the radio resources of a physical downlink shared channel so that the physical uplink control channel (ACK/NACK of HARQ or the like) is not transmitted with RB in which the interference level is large. When the interference level is large in the radio resource of the random access channel, it is considered that the DU 1 changes the position of the radio resource of the random access channel to the position of a frequency in which the interference level is small.

The processing procedure when the RU 2 measures the interference level and transmits the interference level to the DU 1 has been described above. Next, modification examples of the above-described processing procedure will be described.

### (Modification Example 1)

The value of the interference level included in the "measurement result information" transmitted from the RU 2 to the DU 1 may be a value quantized at predetermined granularity (for example, intervals of 1 dBm or intervals of 2 dBm). This is because, for example, in LTE, the user equipment UE is indicated to perform the TPC control with a discrete value such as +3 dB, +1 dB, or -1 dB, therefore it is not necessary increase the granularity of the interference level reported from the RU 2 to that extent when the TPC control is performed according to the interference level.

The value of the interference level included in the "measurement result information" transmitted from the RU 2 to the DU 1 may be a difference value from a previous report value. In general, since it is considered that the interference level is rarely considerably changed at a time and the interference level is a large value from the viewpoint of, for example, an absolute value such as -100 dBm in many cases, an information amount (the number of bits) of the "measurement result information" can be reduced.

The "report unit" included in the "report condition information" transmitted from the DU 1 to the RU 2 may be a quantized unit. For example, when 10 RB is set as 1 unit and "1" is set in the "report unit," the quantized unit means a 10 RB unit. When "2" is set in the "report unit," the quantized unit means a 20 RB unit. When "3" is set in the "report unit," the quantized unit means a 30 RB unit. The radio resources used at the physical uplink shared channel are assumed to be the relatively large number of RBs, a system bandwidth (for example, 100 MHz to 1000 MHz) in 5G is assumed to be greater than in LTE, and necessity for considering the interference level in the 1 RB unit is assumed to be low at the time of allocating the radio resources of the physical uplink shared channel on the side of the DU 1. Therefore, by setting the "report unit" included in the "report condition information" to a quantized unit, it is possible to reduce the information amount (the number of bits) of the "report condition information."

### (Modification Example 2)

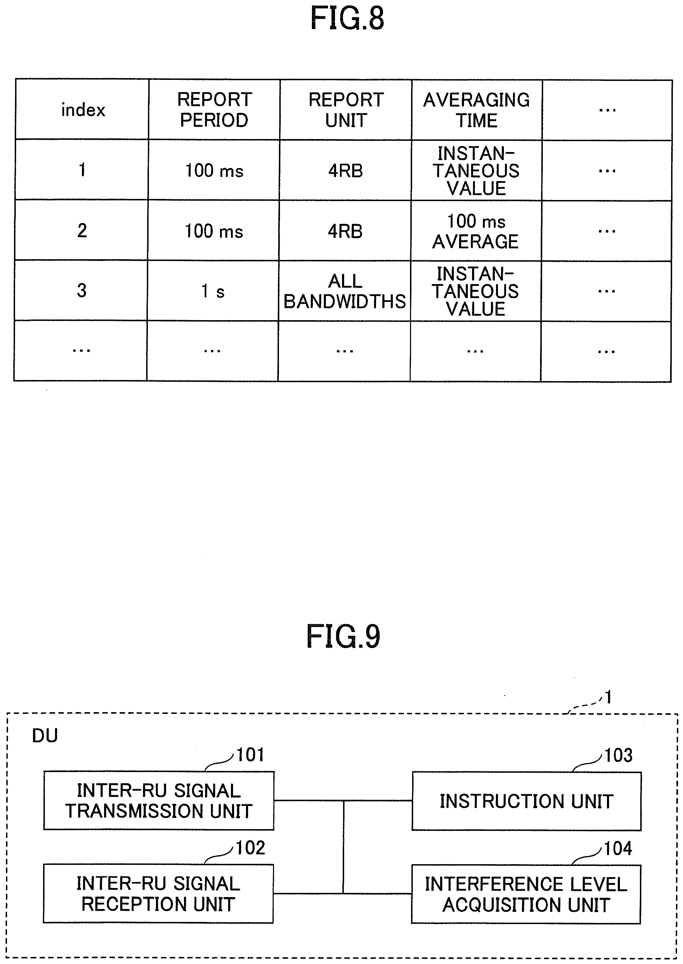

The "report period," the "report unit," and the "average method" included in the "report condition information" may be expressed with index values defined in advance. Examples of indexes are illustrated in Fig. 8. For example, in the case of "index 1," it is meant that the report period is 100 ms, the report unit is a 4 RB unit, and the averaging time is an instantaneous value (that is, particularly, it is not necessary to perform averaging). The table illustrated in Fig. 8 may be defined in advance in a standard specification or the like or may be notified from the DU 1 to the RU 2 at the time of activating the RU 2. Thus, it is possible to reduce an information amount (the number of bits) of the "report condition information."

### (Modification Example 3)

The RU 2 may transmit the measurement result of the interference level to the DU 1 only when the measurement result of the interference level satisfies a predetermined condition. The predetermined condition may be, for example, a case in which the interference level measured by the RU 2 exceeds a plurality of threshold values (for example, -100 dBm, -80 dBm, and -60 dBm). For the plurality of threshold values, a hysteresis may be provided or the number of protection steps may be provided. When the hysteresis is provided and the interference level further exceeds a predetermined threshold by the hysteresis, the RU 2 operates to transmit (report) the interference level to the DU 1. When the number of protection steps is provided and the interference level exceeds the same predetermined threshold by the number of protection steps (for example, 3 steps), the RU 2 operates to transmit (report) the interference level to the DU 1. By providing the hysteresis or the number of protection steps, it is possible to prevent the interference level from being frequently transmitted (reported) from the RU 2 to the DU 1 when the interference level exceeds the threshold value and the interference level varies near the predetermined threshold.

### (Modification Example 4)

The RU 2 may include an arrival direction of interference waves in the "measurement result information" and transmit the measurement result information to the DU 1. Thus, the DU 1 can perform control (CoMP or the like) of suppressing interference in cooperation with adjacent cells. Depending on a situation of the interference waves (for example, the number of arrival directions of the interference waves is large), it is difficult to perform cooperation control with the DU 1. Therefore, only when the effect of the cooperation control is determined to be expected (for example, when an arrival direction of the interference waves can be specified), the RU 2 may include the arrival direction of the interference waves in the measurement result information and may transmit the measurement result information to the DU 1. Thus, it is possible to reduce an information amount (the number of bits) of the "measurement result information."

### (Modification Example 5)

The RU 2 may change the "report period," the "report unit," and the "average method" included in the "report condition information" through self-determination of the RU 2. For example, when a processing load of the RU 2 is large, an operation of changing the period (the report period) at which the "measurement result information" is transmitted to the DU 1 to a predetermined multiple (for example, twice) is considered. In this case, the RU 2 may notify the DU 1 of a changed point.

### (Modification Example 6)

The "report condition information" may be set semi-statically using OAM or the like in the RU 2 or may be defined in advance in a standard specification or the like. Some of the "report period," the "report unit," and the "average method" included in the "report condition information" may be set semi-statically using OAM or the like in the RU 2 or may be defined in advance in a standard specification or the like. Thus, since it is not necessary for the DU 1 to transmit some or all of the "report condition information" to the RU 2, it is possible to reduce an information amount transmitted from the DU 1 to the RU 2.

### (Modification Example 7)

The "measurement resource information" may include only information indicating a range of a frequency at which the interference level is to be measured by the RU 2 without indicating a specific physical channel. As described above, when the interference level is measured, the RU 2 may determine whether an uplink signal is actually transmitted from the user equipment UE in the radio resource with which the interference level is measured. When the uplink signal is transmitted, it is considered that the interference level is measured using a reference signal included in the uplink signal. Therefore, the DU 1 may further transmit information indicating a scheduling situation to the RU 2. Since the sequence and position of the reference signal are assumed to be different for each physical channel, the RU 2 may determine a physical uplink channel mapped to certain frequency and time resources in advance through OAM or the like.

### <Functional Configuration>

### (DU)

Fig. 9 is a diagram illustrating a functional configuration example of the DU according to the embodiment. As illustrated in Fig. 9, the DU 1 includes an inter-RU signal transmission unit 101, an inter-RU signal reception unit 102, an instruction unit 103, and an interference level acquisition unit 104. Fig. 9 illustrates only functional units of the DU 1 particularly related to the embodiment. The DU 1 has functions (not illustrated) of performing operations in conformity to at least LTE (including 5G). The functional configuration illustrated in Fig. 9 is merely an example. Any functional subdivision or any names of the functional units may be used as long as the operations according to the embodiment can be performed. However, some of the processes of the DU 1 described above (example, only one specific example or a plurality of modification examples) may be executable.

The inter-RU signal transmission unit 101 has a function of generating a signal by performing a process of each layer on data to be transmitted from the DU 1 and transmitting the generated signal to the RU 2 via the FH. The inter-RU signal reception unit 102 has a function of receiving the signal from the RU 2 via the FH and acquiring the data by processing the process of each layer on the received signal. The inter-RU signal transmission unit 101 and the inter-RU signal reception unit 102 have a function as an interface of a predetermined protocol used for the FH.

The instruction unit 103 has a function of giving various instructions (indications) to measure the interference level to the RU 2. More specifically, the instruction unit 103 has a function of transmitting the "measurement resource information" and the "report condition information" to the RU 2 via the inter-RU signal transmission unit 101.

The interference level acquisition unit 104 has a function of acquiring the interference level measured by the RU 2 from the RU 2. More specifically, the interference level acquisition unit 104 has a function of acquiring the "measurement result information" from the RU 2 via the inter-RU signal reception unit 102.

### (RU)

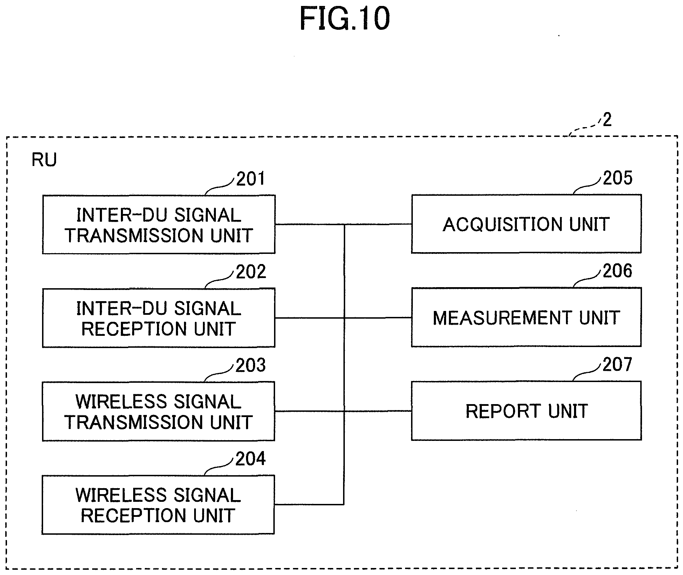

Fig. 10 is a diagram illustrating a functional configuration example of the RU according to the embodiment. As illustrated in Fig. 10, the RU 2 includes an inter-DU signal transmission unit 201, an inter-DU signal reception unit 202, a wireless signal transmission unit 203, a wireless signal reception unit 204, an acquisition unit 205, a measurement unit 206, and a report unit 207. Fig. 10 illustrates only functional units of the RU 2 particularly related to the embodiment. The RU 2 has functions (not illustrated) of performing operations in conformity to at least LTE (including 5G). The functional configuration illustrated in Fig. 10 is merely an example. Any functional subdivision or any names of the functional units may be used as long as the operations according to the embodiment can be performed. However, some of the processes of the RU 2 described above (example, only one specific example or a plurality of modification examples) may be executable.

The inter-DU signal transmission unit 201 has a function of transmitting a signal to be transmitted to the DU 1 to the DU 1 via the FH. The inter-DU signal reception unit 202 has a function of receiving a signal from the DU 1 via the FH. The inter-DU signal transmission unit 201 and the inter-DU signal reception unit 202 have a function as an interface of a predetermined protocol used for the FH.

The wireless signal transmission unit 203 has a function of generating a wireless signal from the signal received by the inter-DU signal reception unit 202 and transmitting the wireless signal to the user equipment UE. The wireless signal reception unit 204 has a function of receiving a wireless signal from the user equipment UE, performing a process of a predetermined layer on the received wireless signal, and delivering the wireless signal to the inter-DU signal transmission unit 201.

The acquisition unit 205 has a function of acquiring the measurement resource information indicating a radio resource with which uplink interference wave power is measured from the Du 1. The acquisition unit 205 may acquire the report condition information indicating the report condition at the time of reporting the uplink interference wave power from the DU 1.

The measurement unit 206 has a function of measuring the interference level of the radio resource indicated by the measurement resource information.

The report unit 207 has a function of transmitting the measurement result of the interference level measured by the measurement unit 206 to the DU 1 via the inter-DU signal transmission unit 201. The report unit 207 may transmit the measurement result of the interference level measured by the measurement unit 206 according to the report condition indicated by the report condition information. The report unit 207 may transmit the measurement result obtained by quantizing the interference level measured by the measurement unit 206 in the predetermined unit to the DU 1. The report unit 207 may transmit the difference value from the measurement result of the previous interference level to the DU 1 when the measurement result of the interference level measured by the measurement unit 206 is transmitted to the Du 1. The report unit 207 may transmit the measurement result of the interference level measured by the measurement unit 206 to the DU 1 when the measurement result of the interference level measured by the measurement unit 206 satisfies the predetermined condition.

### <Hardware Configuration>

The block diagrams (Figs. 9 and 10) used to describe the foregoing embodiment are blocks of functions units. The functional blocks (configurations) are realized in any combination of hardware and/or software. Means for realizing each functional block is not particularly limited. That is, each functional block may be realized by one physically and/or logically combined device or may be realized. Alternatively, two or more physically and/or logically separated devices may be connected directly and/or indirectly (for example, in a wired and/or wireless manner) and the plurality of devices may realize each functional block.

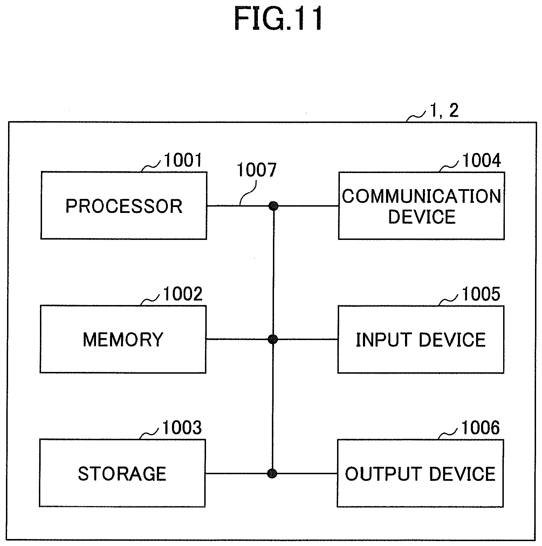

For example, the DU 1 and the RU 2 according to the embodiment may function as a computer that performs a process of the interference wave power report method of the invention. Fig. 11 is a diagram illustrating a hardware configuration example of the DU 1 and the RU 2 according to the embodiment. The above-described DU 1 and RU 2 may be physically configured as a computer apparatus that include a processor 1001, a memory 1002, a storage 1003, a communication device 1004, an input device 1005, an output device 1006, and a bus 1007.

In the following description, the words such as a "device" can be replaced with a circuit, a device, a unit, or the like. The hardware configurations of the DU 1 and the RU 2 may include one device or a plurality of devices illustrated in the drawings or may not include some of the devices.

Each function of the DU 1 and the RU 2 is realized by reading predetermine software (program) to hardware such as the processor 1001 and the memory 1002 so that the processor 1001 performs calculation and data in the memory 1002 by controlling communication by the communication device 1004 and reading and/or writing of the storage 1003.

The processor 1001 operates, for example, an operating system to control the entire computer. The processor 1001 may be configured to include a central processing unit (CPU) that includes an interface with a peripheral device, a control device, a calculation device, and a register. For example, the processor 1001 may realize the inter-RU signal transmission unit 101, the inter-RU signal reception unit 102, the instruction unit 103, and the interference level acquisition unit 104 of the DU 1 and the inter-DU signal transmission unit 201, the inter-DU signal reception unit 202, the wireless signal transmission unit 203, the wireless signal reception unit 204, the acquisition unit 205, and measurement unit 206, and the report unit 207 of the RU 2.

The processor 1001 reads a program (program code), a software module, or data from the storage 1003 and/or the communication device 1004 to the memory 1002 and performs various processes according to the program, the software module, or the data. A program causing a computer to execute at least some of the operations described in the embodiment is used as the program. For example, the inter-RU signal transmission unit 101, the inter-RU signal reception unit 102, the instruction unit 103, and the interference level acquisition unit 104 of the DU 1 and the inter-DU signal transmission unit 201, the inter-DU signal reception unit 202, the wireless signal transmission unit 203, the wireless signal reception unit 204, the acquisition unit 205, and measurement unit 206, and the report unit 207 of the RU 2 may be realized by a control program that is stored in the memory 1002 and is operated by the processor 1001 or may be realized similarly in the other functional blocks. The above-described various processes have been performed by the one processor 1001, but may be performed simultaneously or sequentially by two or more processors 1001. The processor 1001 may be mounted on one or more chips. The program may be transmitted from a network via an electric communication circuit.

The memory 1002 is a computer-readable recording medium and may be configured with at least one of, for example, a read-only memory (ROM), an erasable programmable ROM (EPROM), an electrically erasable programmable ROM (EEPROM), a random access memory (RAM), and the like. The memory 1002 may be referred to as a register, a cache, or a main memory (main storage device). The memory 1002 can store a program (program code), a software module, or the like that can be executed to perform an interference wave power report method according to the embodiment.

The storage 1003 is a computer-readable recording medium and may be configured with at least one of, for example, an optical disc such as a compact disc ROM (CD-ROM), a hard disk drive, a flexible disc, a magneto-optical disc (for example, a compact disc, a digital versatile disk, or a Blu-ray (registered trademark) disc), a smart card, a flash memory (for example, a card, a stick, or a key drive), a floppy (registered trademark) disk, a magnetic strip, and the like. The storage 1003 may be referred to as an auxiliary storage device. The above-described storage medium may be, for example, a database, a server, or another appropriate medium including the memory 1002 and/or the storage 1003.

The communication device 1004 is hardware (transmission and reception device) that performs communication between computers via a wired and/or wireless network and is also referred to as, for example, a network device, a network controller, a network card, or a communication module. For example, the inter-RU signal transmission unit 101 and the inter-RU signal reception unit 102 of the DU 1 and the inter-DU signal transmission unit 201, the inter-DU signal reception unit 202, the wireless signal transmission unit 203, and the wireless signal reception unit 204 of the RU 2 may be realized by the communication device 1004.

The input device 1005 is an input device (for example, a keyboard, a mouse, a microphone, a switch, a button, or a sensor) that receives an input from the outside. The output device 1006 is an output device (for example, a display, a speaker, or an LED lamp) that performs an output to the outside. The input device 1005 and the output device 1006 may be configured integrally (for example, may be configured as a touch panel).

Devices of the processor 1001 and the memory 1002 are connected by a bus 1007 that communicates information. The bus 1007 may be configured as a single bus or may be configured as different buses between the devices.

The DU 1 and the RU 2 may be configured to include hardware such as a microprocessor, a digital signal processor (DSP), an application specific integrated circuit (ASIC), a programmable logic device (PLD), or a field programmable gate array (FPGA) or some or all of the functional blocks may be realized by the hardware. For example, the processor 1001 may be mounted on at least one of the hardware.

### <Conclusion>

As described above, an embodiment provides an extension station in a wireless base station including the extension station and a central aggregation station. The extension station includes: an acquisition unit configured to acquire measurement resource information from the central aggregation station; a measurement unit configured to measure interference wave power of a radio resource indicated by the measurement resource information; and a transmission unit configured to transmit a measurement result of the interference wave power measured by the measurement unit to the central aggregation station. The measurement resource information is information indicating a radio resource of which uplink interference wave power is to be measured and is supplied by the extension station. The extension station provides a technology for enabling the RU to measure the interference level and report the interference level to the DU.

The acquisition unit may acquire report condition information indicating a report condition at the time of reporting uplink interference wave power from the central aggregation station. The transmission unit may transmit the measurement result of the interference wave power measured by the measurement unit according to a report condition indicated by the report condition information. Thus, the RU 2 can report the interference level to the DU 1 according to the report condition indicated by the DU 1.

The transmission unit may transmit a measurement result obtained by quantizing the interference wave power measured by the measurement unit in a predetermined unit to the central aggregation station. Thus, it is possible to reduce an information amount at the time of reporting the interference level from the RU 2 to the DU 1.

The transmission unit may transmit a difference value from a previous measurement result of the interference wave power to the central aggregation station when the transmission unit transmits the measurement result of the interference wave power measured by the measurement unit. Since it is considered that the interference level is rarely considerably changed at a time and the interference level is a large value from the viewpoint of, for example, an absolute value such as -100 dBm in many cases, it is possible to reduce an information amount at the time of reporting the interference level from the RU 2 to the DU 1.

The transmission unit may transmit the measurement result of the interference wave power measured by the measurement unit when the measurement result of the interference wave power measured by the measurement unit satisfies the predetermined condition. Thus, it is possible to reduce an information amount at the time of reporting the interference level from the RU 2 to the DU 1.

An embodiment provides an interference wave power report method performed by an extension station in a wireless base station including the extension station and a central aggregation station. The interference wave power report method includes the steps of: acquiring measurement resource information from the central aggregation station; measuring interference wave power of a radio resource indicated by the measurement resource information; and transmitting a measurement result of the interference wave power measured by the measurement unit to the central aggregation station. The measurement resource information is information indicating a radio resource of which uplink interference wave power is to be measured. The interference wave power report method provides a technology for enabling the RU to measure the interference level and report the interference level to the DU.

### <Supplements of Embodiment>

The physical uplink shared channel may be referred to as PUSCH or may be referred to as another channel name defined in 5G or the like. The sounding reference signal may be referred to as a sounding reference signal (SRS) or may be referred to as another channel name defined in 5G or the like. The physical uplink control channel may be referred to as PUCCH or may be referred to as another channel name defined in 5G or the like. The random access channel may be referred to as RACH or may be referred to as another channel name defined in 5G or the like.

Information transmission (notification, reporting) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or combinations thereof. Further, an RRC message may be referred to as RRC signaling. Further, an RRC message may be, for example, an RRC connection setup message, an RRC connection reconfiguration message, or the like.

An aspect/embodiment described in the present specification may be applied to a system that uses LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), other appropriate systems, and/or a next generation system enhanced based thereon.

Determination or judgment may be performed according to a value (0 or 1) represented by a bit, may be performed according to a boolean value (true or false), or may be performed according to comparison of numerical values (e.g., comparison with a predetermined value).

It should be noted that the terms described in the present specification and/or terms necessary for understanding the present specification may be replaced by terms that have the same or similar meaning. For example, a channel and/or a symbol may be a signal. Further, a signal may be a message.

There is a case in which a UE may be referred to as a subscriber station, a mobile unit, subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

An aspect/embodiment described in the present specification may be used independently, may be used in combination, or may be used by switching according to operations. Further, transmission of predetermined information (e.g., transmission of "it is X") is not limited to explicitly-performed transmission. The transmission of predetermined information may be performed implicitly (e.g., explicit transmission of predetermined information is not performed).

As used herein, the term "determining" may encompasses a wide variety of actions. For example, "determining" may be regarded as calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining.

As used herein, the phrase "based on" does not mean, unless otherwise noted, "based on only". In other words, the phrase "base on" means both "based on only" and "based on at least".

Also, the order of processing steps, sequences or the like of an aspect/embodiment described in the present specification may be changed as long as there is no contradiction. For example, in a method described in the present specification, elements of various steps are presented in an exemplary order. The order is not limited to the presented specific order.

Input/output information, etc., may be stored in a specific place (e.g., memory) or may be stored in a management table. The input/output information, etc., may be overwritten, updated, or added. Output information, etc., may be deleted. Input information, etc., may be transmitted to another apparatus.

Information, a signal, etc., described in the present specification may be represented by using any one of the various different techniques. For example, data, an instruction, a command, information, a signal, a bit, a symbol, a chip or the like described throughout in the present specification may be represented by voltage, current, electromagnetic waves, magnetic fields or a magnetic particle, optical fields or a photon, or any combination thereof.

The information, the parameters, or the like described in the present specification may be expressed with absolute values, may be expressed with relative values from predetermined values, or may be expressed with other corresponding information. For example, the radio resources may be indicated by indexes.

The names used for various kinds of information included in the above-described "measurement resource information" and "report condition information" are not limitative in certain points.

The reference signal can be abbreviated for an RS and may also be referred to as a pilot in accordance with a standard to be applied.

In the embodiments, the inter-DU signal transmission unit 201 and the report unit 207 are examples of a transmission unit.

### EXPLANATIONS OF LETTERS OR NUMERALS

- 1: DU
- 2: RU
- UE: user equipment
- 101: inter-RU signal transmission unit
- 102: inter-RU signal reception unit
- 103: instruction unit
- 104: interference level acquisition unit
- 201: inter-DU signal transmission unit
- 202: inter-DU signal reception unit
- 203: wireless signal transmission unit
- 204: wireless signal reception unit
- 205: acquisition unit
- 206: measurement unit
- 207: report unit
- 1001: processor
- 1002: memory
- 1003: storage
- 1004: communication device
- 1005: input device
- 1006: output device

## Claims

1. A centralized RAN, C-RAN, radio unit, RU, (2) in a wireless base station including the C-RAN RU (2) and a centralized RAN, C-RAN, digital unit, DU, (1), the C-RAN RU (2) comprising:
an acquisition unit (205) configured to acquire measurement resource information from the C-RAN DU (1);
a measurement unit (206) configured to measure interference level of a radio resource indicated by the measurement resource information; and
a transmission unit (203) configured to transmit a measurement result of the interference level measured by the measurement unit (206) to the C-RAN DU (1),
wherein the measurement resource information is information indicating a radio resource of which uplink interference level is to be measured,
wherein the transmission unit (203) is configured to transmit the measurement result of the interference level measured by the measurement unit (206) to the C-RAN DU (1) when the measurement result of the interference level measured by the measurement unit (206) satisfies a predetermined condition.

2. The C-RAN RU (2) according to claim 1,
wherein the acquisition unit (205) is further configured to acquire report condition information indicating a report condition at the time of reporting uplink interference level from the C-RAN DU (1), and
wherein the transmission unit (203) is further configured to transmit the measurement result of the interference level measured by the measurement unit (206) according to a report condition indicated by the report condition information.

3. The C-RAN RU (2) according to claim 1 or 2,
wherein the transmission unit (203) is further configured to transmit a measurement result obtained by quantizing the interference level measured by the measurement unit (206) in a predetermined unit to the C-RAN DU (1).

4. The C-RAN RU (2) according to any one of claims 1 to 3,
wherein the transmission unit (203) is further configured to transmit a difference value from a previous measurement result of the interference level to the C-RAN DU (1) when the transmission unit (203) transmits the measurement result of the interference level measured by the measurement unit (206) .

5. An interference level report method performed by a centralized RAN, C-RAN, radio unit, RU, (2) in a wireless base station including the C-RAN RU (2) and a centralized RAN, C-RAN, digital unit, DU, (1), the interference level report method comprising the steps of:
acquiring measurement resource information from the C-RAN DU (1);
measuring interference level of a radio resource indicated by the measurement resource information; and
transmitting a measurement result of the interference level to the C-RAN DU (1),
wherein the measurement resource information is information indicating a radio resource of which uplink interference level is to be measured,
wherein the measurement result of the interference level is transmitted to the C-RAN DU (1) when the measurement result of the interference level satisfies a predetermined condition.

## Patentansprüche

1. Zentralisierte RAN-, C-RAN-, Funkeinheit, RU, (2) in einer drahtlosen Basisstation, beinhaltend die C-RAN RU (2) und eine zentralisierte RAN, C-RAN, Digitaleinheit, DU, (1), wobei die C-RAN RU (2) umfasst:
eine Erfassungseinheit (205), die konfiguriert ist, Messressourceninformationen von der C-RAN DU (1) zu erfassen;
eine Messeinheit (206), die konfiguriert ist, Interferenzpegel einer Funkressource zu messen, der durch die Messressourceninformationen angegeben ist; und
eine Übertragungseinheit (203), die konfiguriert ist, ein Messergebnis des Interferenzpegels, der durch die Messeinheit (206) gemessen wurde, an die C-RAN DU (1) zu übertragen,
wobei die Messressourceninformationen Informationen sind, die eine Funkressource angeben, deren Uplink-Interferenzpegel zu messen ist,
wobei die Übertragungseinheit (203) konfiguriert ist, das Messergebnis des Interferenzpegels, der durch die Messeinheit (206) gemessen wurde, an die C-RAN DU (1) zu übertragen, wenn das Messergebnis des Interferenzpegels, der durch die Messeinheit (206) gemessen wurde, eine vorbestimmte Bedingung erfüllt.

2. C-RAN RU (2) nach Anspruch 1,
wobei die Erfassungseinheit (205) weiter konfiguriert ist, Meldebedingungsinformationen zu erfassen, die eine Meldebedingung zum Zeitpunkt eines Meldens von Uplink-Interferenzpegel von der C-RAN DU (1) angibt, und
wobei die Übertragungseinheit (203) weiter konfiguriert ist, das Messergebnis des Interferenzpegels, der durch die Messeinheit (206) gemessen wurde, gemäß einer Meldebedingung zu übertragen, die durch die Meldebedingungsinformationen angegeben ist.

3. C-RAN RU (2) nach Anspruch 1 oder 2,
wobei die Übertragungseinheit (203) weiter konfiguriert ist, ein Messergebnis, das durch Quantifizieren des Interferenzpegels, der durch die Messeinheit (206) gemessen wurde, in einer vorbestimmten Einheit erhalten wird, an die C-RAN DU (1) zu übertragen.

4. C-RAN RU (2) nach einem der Ansprüche 1 bis 3,
wobei die Übertragungseinheit (203) weiter konfiguriert ist, einen Differenzwert aus einem vorherigen Messergebnis des Interferenzpegels an die C-RAN DU (1) zu übertragen, wenn die Übertragungseinheit (203) das Messergebnis des Interferenzpegels, der durch die Messeinheit (206) gemessen wurde, überträgt.

5. Interferenzpegelmeldeverfahren, das durch eine zentralisierte RAN-, C-RAN, Funkeinheit, RU, (2) in einer drahtlosen Basisstation durchgeführt wird, die die C-RAN RU (2) und eine zentralisierte RAN, C-RAN, Digitaleinheit, DU, (1) beinhaltet, wobei das Interferenzpegelmeldeverfahren die Schritte umfasst:
Erfassen von Messressourceninformationen von der C-RAN DU (1);
Messen von Interferenzpegel einer Funkressource, der durch die Messressourceninformationen angegeben ist; und
Übertragen eines Messergebnisses des Interferenzpegels an die C-RAN DU (1),
wobei die Messressourceninformationen Informationen sind, die eine Funkressource angeben, deren Uplink-Interferenzpegel zu messen ist,
wobei das Messergebnis des Interferenzpegels an die C-RAN DU (1) übertragen wird, wenn das Messergebnis des Interferenzpegels eine vorbestimmte Bedingung erfüllt.

## Revendications

1. Unité radio, RU, RAN centralisé, C-RAN (2) dans une station de base sans fil incluant la RU C-RAN (2), et unité numérique, DU, RAN centralisé, C-RAN (1), la RU C-RAN (2) comprenant:
une unité d'acquisition (205) configurée pour acquérir des informations de ressource de mesure de la DU C-RAN (1) ;
une unité de mesure (206) configurée pour mesurer le niveau d'interférence d'une ressource radio indiquée par les informations de ressource de mesure ; et
une unité de transmission (203) configurée pour transmettre à la DU C-RAN (1) un résultat de mesure du niveau d'interférence mesuré par l'unité de mesure (206),
dans laquelle les informations de ressource de mesure sont des informations indiquant une ressource radio dont le niveau d'interférence de liaison montante doit être mesuré,
dans laquelle l'unité de transmission (203) est configurée pour transmettre le résultat de mesure du niveau d'interférence mesuré par l'unité de mesure (206) à la DU C-RAN (1) lorsque le résultat de mesure du niveau d'interférence mesuré par l'unité de mesure (206) satisfait une condition prédéterminée.

2. RU C-RAN (2) selon la revendication 1,
dans laquelle l'unité d'acquisition (205) est en outre configurée pour acquérir des informations de condition de rapport indiquant une condition de rapport au moment de rapporter le niveau d'interférence de liaison montante à partir de la DU C-RAN (1), et
dans laquelle l'unité de transmission (203) est en outre configurée pour transmettre le résultat de mesure du niveau d'interférence mesuré par l'unité de mesure (206) selon une condition de rapport indiquée par les informations de condition de rapport.

3. RU C-RAN (2) selon la revendication 1 ou 2,
dans laquelle l'unité de transmission (203) est en outre configurée pour transmettre à la DU C-RAN (1) un résultat de mesure obtenu en quantifiant le niveau d'interférence mesuré par l'unité de mesure (206) dans une unité prédéterminée.

4. RU C-RAN (2) selon l'une quelconque des revendications 1 à 3,
dans laquelle l'unité de transmission (203) est en outre configurée pour transmettre à la DU C-RAN (1) une valeur de différence à partir d'un résultat de mesure précédent du niveau d'interférence lorsque l'unité de transmission (203) transmet le résultat de mesure du niveau d'interférence mesuré par l'unité de mesure (206).

5. Procédé de rapport de niveau d'interférence réalisé par une unité radio, RU, RAN centralisé, C-RAN (2) dans une station de base sans fil incluant la RU C-RAN (2) et une unité numérique, DU, RAN centralisé, C-RAN (1), le procédé de rapport de niveau d'interférence comprenant les étapes consistant à :
acquérir des informations de ressource de mesure à partir de la DU C-RAN (1) ;
mesurer le niveau d'interférence d'une ressource radio indiquée par les informations de ressource de mesure ; et
transmettre un résultat de mesure du niveau d'interférence à la DU C-RAN (1),
dans lequel les informations de ressource de mesure sont des informations indiquant une ressource radio dont le niveau d'interférence de liaison montante doit être mesuré,
dans lequel le résultat de mesure du niveau d'interférence est transmis à la DU C-RAN (1) lorsque le résultat de mesure du niveau d'interférence satisfait une condition prédéterminée.
